# EUROPEAN PATENT APPLICATION

(11) **EP 4 708 040 A1**
(43) Date of publication of application: **11.03.2026**
(21) Application number: 24844292.3
(22) Date of filing: 23.04.2024
(51) Int. Cl.: G06F 9/451

(54) **INTERFACE IMAGE PROCESSING METHOD AND APPARATUS, ELECTRONIC DEVICE, AND STORAGE MEDIUM**

(30) Priority: 24.07.2023 CN 202310922653
(71) Applicant: Honor Device Co., Ltd., Shenzhen, Guangdong 518040 (CN)
(72) Inventor: MU, Weihu, Shenzhen, Guangdong 518040 (CN)
(74) Representative: Gill Jennings & Every LLP
(86) International application number: PCT/CN2024/089245
(87) International publication number: WO 2025/020596

(57) **Abstract**

Embodiments of this application provide an interface image processing method and apparatus, an electronic device, and a storage medium, and relate to the field of electronic device technologies, to improve picture procedural performance. The interface image processing method includes: executing an input event task and a draw event task of a t^{th} frame in an interface image processing process of the t^{th} frame; and executing an animation event task of a (t+1)^{th} frame after the input event task and the draw event task of the t^{th} frame are executed in the interface image processing process of the t^{th} frame.

## Description

This application claims priority to Chinese Patent Application No. 202310922653.4, entitled "INTERFACE IMAGE PROCESSING METHOD AND APPARATUS, ELECTRONIC DEVICE, AND STORAGE MEDIUM", and filed with the China National Intellectual Property Administration on July 24, 2023, which is incorporated herein by reference in its entirety.

### TECHNICAL FIELD

This application relates to the field of electronic device technologies, and in particular, to an interface image processing method and apparatus, an electronic device, and a storage medium.

### BACKGROUND

In an electronic device like a mobile phone or a tablet computer, when a user performs an interface operation, for example, taps or slides a page, an interface is rendered through a processor, to update an image. If a load of the processor is high, resources of the processor are occupied by another process, or the like, a delay may be generated in an interface image processing process, causing phenomena such as frame freezing of image display and an unsmooth sliding operation.

### SUMMARY

Technical solutions of this application provide an interface image processing method and apparatus, an electronic device, and a storage medium, to improve picture procedural performance.

According to a first aspect, an interface image processing method is provided, including: executing an input event task and a draw event task of a t^{th} frame in an interface image processing process of the t^{th} frame; and executing an animation event task of a (t+1)^{th} frame in the interface image processing process of the t^{th} frame after the input event task and the draw event task of the t^{th} frame are executed.

In a possible implementation, the process of executing an animation event task of a (t+1)^{th} frame in the interface image processing process of the t^{th} frame after the input event task and the draw event task of the t^{th} frame are executed includes: determining, after a vertical synchronization Vsync signal of the t^{th} frame is received, whether an animation event task of the t^{th} frame has been executed, and executing, if the animation event task of the t^{th} frame has been executed, the input event task and the draw event task of the t^{th} frame; and executing, if time before a Vsync signal of the (t+1)^{th} frame is received is sufficient to execute the animation event task of the (t+1)^{th} frame, the animation event task of the (t+1)^{th} frame before the Vsync signal of the t^{th} frame is received and after the input event task and the draw event task of the t^{th} frame are executed.

In a possible implementation, the interface image processing method further includes: after the vertical synchronization Vsync signal of the t^{th} frame is received, executing the input event task, the animation event task, and the draw event task of the t^{th} frame if it is determined that the animation event task of the t^{th} frame is not executed.

In a possible implementation, the interface image processing method further includes: after the process of executing the input event task and the draw event task of the t^{th} frame, executing a rendering task of the t^{th} frame if the time before the Vsync signal of the (t+1)^{th} frame is received is insufficient to execute the animation event task of the (t+1)^{th} frame.

In a possible implementation, the process of executing, if time before a Vsync signal of the (t+1)^{th} frame is received is sufficient to execute the animation event task of the (t+1)^{th} frame, the animation event task of the (t+1)^{th} frame before the Vsync signal of the t^{th} frame is received and after the input event task and the draw event task of the t^{th} frame are executed includes: if the time before the Vsync signal of the (t+1)^{th} frame is received is sufficient to execute the animation event task of the (t+1)^{th} frame, executing the animation event task of the (t+1)^{th} frame with a delay of a time interval before the Vsync signal of the t^{th} frame is received and after the input event task and the draw event task of the t^{th} frame are executed.

In a possible implementation, the process of determining, after a vertical synchronization Vsync signal of the t^{th} frame is received, whether the animation event task of the t^{th} frame has been executed, and executing, if the animation event task of the t^{th} frame has been executed, the input event task and the draw event task of the t^{th} frame includes: determining, after a display event receiver receives the vertical synchronization Vsync signal of the t^{th} frame, whether the animation event task of the t^{th} frame has been executed; and removing, if the animation event task of the t^{th} frame has been executed, the animation event task of the t^{th} frame from a task list, and sending an interface image processing request of the t^{th} frame to a choreographer; and executing, by the choreographer in response to the interface image processing request of the t^{th} frame, the input event task and the draw event task of the t^{th} frame in the task list.

In a possible implementation, before the display event receiver receives the vertical synchronization Vsync signal of the t^{th} frame, the method further includes: sending, by a view root layout, a callback request to the choreographer in response to an input event; and adding, by the choreographer, callback information in response to the callback request, and sending a Vsync request to the display event receiver.

In a possible implementation, the input event task, the animation event task, the draw event task, and the rendering task are executed based on a first-type core of a processor, the processor includes the first-type core, a second-type core, and a third-type core, a frequency of the first-type core is less than a frequency of the second-type core, and the frequency of the first-type core is greater than a frequency of the third-type core.

According to a second aspect, an interface image processing apparatus is provided, including: a first module, configured to execute an input event task and a draw event task of a t^{th} frame in an interface image processing process of the t^{th} frame; and a second module, configured to execute an animation event task of a (t+1)^{th} frame in the interface image processing process of the t^{th} frame after the input event task and the draw event task of the t^{th} frame are executed.

According to a third aspect, an electronic device is provided. The electronic device includes a processor and a memory, the memory is configured to store at least one instruction, and the instruction, when loaded and executed by the processor, enables the electronic device to perform the foregoing interface image processing method.

According to a fourth aspect, a computer-readable storage medium is provided. The computer-readable storage medium includes a program or instructions, and when the program or the instructions are run on a computer, the foregoing interface image processing method is performed.

According to the interface image processing method and apparatus, the electronic device, and the storage medium in embodiments of this application, an animation event task of a (t+1)^{th} frame is performed in advance in an interface image processing process of a t^{th} frame, to reduce a probability of image frame freezing caused when an interface image of the (t+1)^{th} frame is not processed in time.

### BRIEF DESCRIPTION OF DRAWINGS

FIG. 1A(1) and FIG. 1A(2) are sequence diagrams of an interface image processing process in the related technologies;
FIG. 1B(1) and FIG. 1B(2) are sequence diagrams of another interface image processing process in the related technologies;
FIG. 2 is a block diagram of a structure of an electronic device according to an embodiment of this application;
FIG. 3 is a block diagram of a software structure according to an embodiment of this application;
FIG. 4A and FIG. 4B are sequence diagrams of an interface image processing process according to an embodiment of this application;
FIG. 5 is a schematic flowchart of an interface image processing process according to an embodiment of this application; and
FIG. 6 is a schematic diagram of a signaling relationship between a plurality of modules in a software structure according to an embodiment of this application.

### DESCRIPTION OF EMBODIMENTS

Terms used in implementations in this application are merely intended to explain specific embodiments of this application rather than being intended to limit this application.

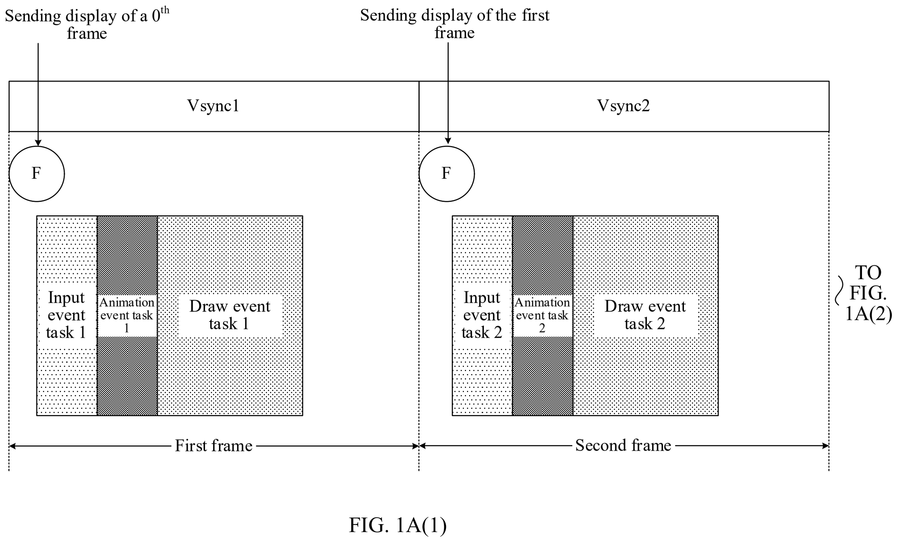

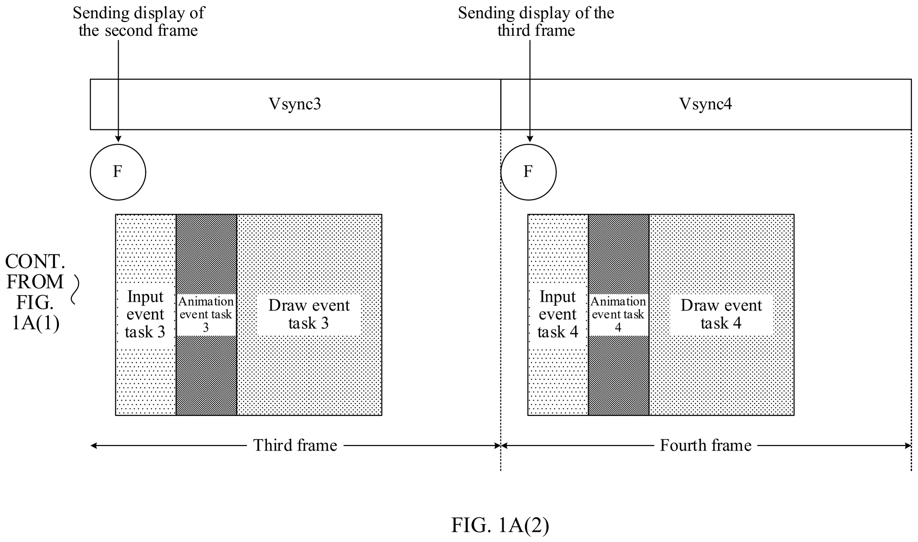

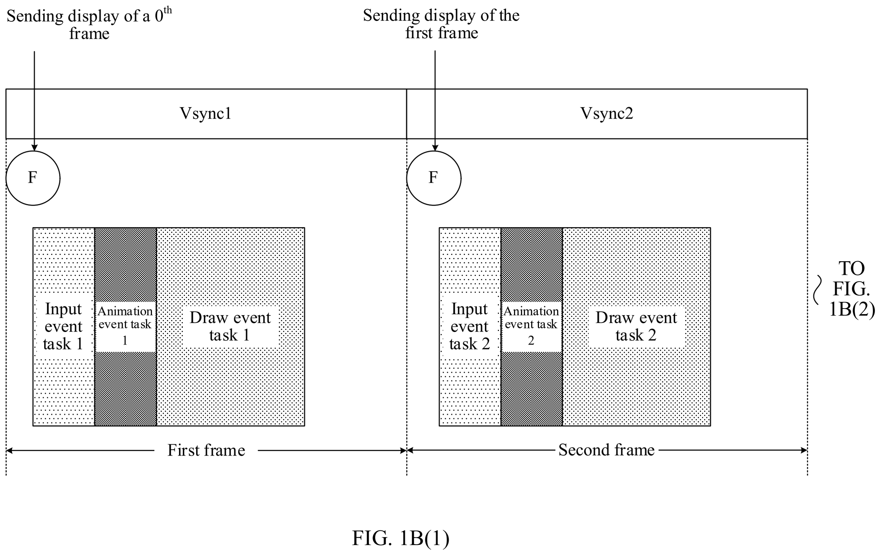

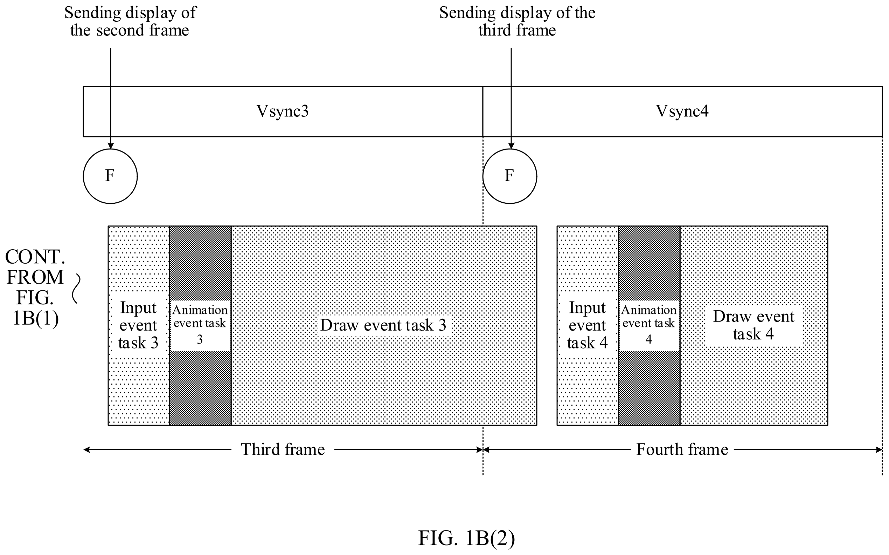

Before embodiments of this application are described, related technologies and technical problems thereof are first described. As shown in FIG. 1A(1) to FIG. 1B(2), after a vertical synchronization (Vsync) signal is received, an electronic device sequentially executes an input (Input) event task, an animation (Animation) event task, and a draw (draw) event task, to render an interface, and then sends the rendered interface for display, to display each frame of image. A circular F mark in FIG. 1A(1) to FIG. 1B(2) indicates time for sending display of the rendered interface. If a draw event task of a frame is delayed, or is even delayed to a next frame, a conflict occurs between rendering of two adjacent frames, causing phenomena such as frame freezing of image display and an unsmooth sliding operation. For example, as shown in FIG. 1B(1) and FIG. 1B(2), assuming that a draw event task 3 of a third frame is delayed to after sending display time of the third frame, a display abnormality of the third frame is caused. To resolve the problem, the following describes embodiments of this application.

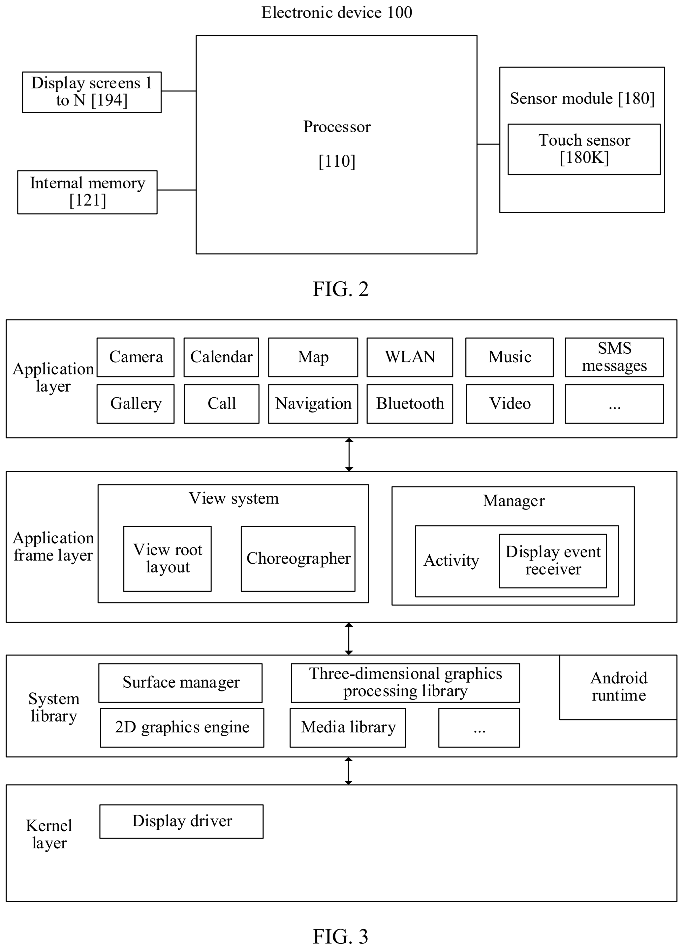

As shown in FIG. 2, an embodiment of this application provides an electronic device 100. The electronic device 100 may include a processor 110, an internal memory 121, a sensor module 180, a display screen 194, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or a different component arrangement may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may generate an operation control signal based on instruction operation code and a sequence signal, to control instruction fetching and instruction execution.

A communication function of the electronic device 100 may be implemented in a wired or wireless manner.

The electronic device 100 implements a display function through the GPU, the display screen 194, the application processor, and the like. The GPU is a microprocessor for image processing, and is connected to the display screen 194 and the application processor. The GPU is configured to perform mathematical and geometric calculation and render graphics. The processor 110 may include one or more GPUs, and the GPU executes program instructions to generate or change display information.

The display screen 194 is configured to display an image, video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, QLED), or the like. In some embodiments, the electronic device 100 may include one or N display screens 194, where N is a positive integer greater than 1.

The internal memory 121 may be configured to store computer-executable program code, and the executable program code includes instructions. The internal memory 121 may include a program storage region and a data storage region. The program storage region may store an operating system, an application required by at least one function (for example, a sound playing function and an image display function), and the like. The data storage region may store data (for example, audio data and an address book) and the like created during use of the electronic device 100. In addition, the internal memory 121 may include a high-speed random access memory, and may also include a non-volatile memory, for example, at least one magnetic disk storage device, a flash memory device, a universal flash storage (universal flash storage, UFS), or the like. The processor 110 runs the instructions stored in the internal memory 121, and/or the instructions stored in the memory arranged in the processor, to perform various function applications and data processing of the electronic device 100.

A touch sensor 180K is also referred to as a "touch device". The touch sensor 180K may be arranged on the display screen 194. The touch sensor 180K and the display screen 194 form a touchscreen, which is also referred to as a "touch control screen". The touch sensor 180K is configured to detect a touch operation performed on or near the touch sensor. The touch sensor may transfer the detected touch operation to the application processor, to determine a touch event type. A visual output related to the touch operation may be provided through the display screen 194. In some other embodiments, the touch sensor 180K may alternatively be arranged on a surface of the electronic device 100 at a location different from that of the display screen 194.

A software system of the electronic device 100 may use a layered architecture, an event-driven architecture, a microkernel architecture, a microservice architecture, or a cloud architecture. In embodiments of this application, an Android system with a layered architecture is used as an example to describe a software structure of the electronic device 100.

FIG. 3 is a block diagram of a software structure of an electronic device 100 according to an embodiment of this application. In the layered architecture, software is divided into a plurality of layers, and each layer has a clear role and task. The layers are in communication with each other through a software interface. In some embodiments, the Android system is divided into four layers: an application layer, an application framework layer, an Android runtime (Android runtime), a system library, and a kernel layer from top to bottom.

The application layer may include a series of application packages. As shown in FIG. 3, the application packages may include applications such as a camera, a gallery, a calendar, a call, a map, navigation, WLAN, Bluetooth, music, video, and SMS messages. The application framework layer provides an application programming interface (application programming interface, API) and a programming framework for the application at the application layer. The application framework layer includes some predefined functions. The application framework layer may include managers (managers), a view system (view system), and the like.

The view system includes visual controls such as a control for displaying text and a control for displaying a picture. The view system may be configured to establish an application. A display interface may include one or more views. The managers include an activity (Activity). The activity is one of basic components of an Android operating system, and may be configured to provide an interactive interface or view for a user in an application. When an application invokes another application, the invoker application invokes an activity in the another application rather than the entire application. In this manner, the activity serves as an entry point for interaction between the application and the user.

Android runtime (Android Runtime) includes a core library and a virtual machine.

The Android runtime (Android Runtime) is responsible for scheduling and managing the Android system. The core library includes two parts: One part is a functional function that needs to be invoked by a java language, and the other part is a core library of Android. The application layer and the application framework layer run on the virtual machine. The virtual machine executes java files of the application layer and the application framework layer as binary files. The virtual machine is configured to execute functions such as object lifecycle management, stack management, thread management, security and abnormality management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL). The surface manager is configured to manage a display subsystem and provide fusion of 2D and 3D layers for a plurality of applications. The media library supports playback and recording of a plurality of commonly used audio and video formats, static image files, and the like. The media library may support a plurality of audio and video encoding formats, for example, MPEG4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawings.

The kernel layer is a layer between hardware and software. The kernel layer includes at least a display driver.

Some concepts and the application scenarios related to embodiments of this application are described below.

The view system includes a view root layout (ViewRootlmpl). The view root layout is configured to manage a root view (View) of a window, and control measurement, layout, and drawing (draw) of the view. Distribution and interaction of all window events are executed or transferred through the view root layout.

The view system further includes a choreographer (Choreographer). The choreographer is a type in the operating system and is configured to coordinate time of an input (Input) event task, an animation (Animation) event task, and a draw (draw) event task. The choreographer executes the input event task by using an input callback method (CALLBACK_INPUT). The input event task is that the application encapsulates and distributes an input event to data of the choreographer. The input event may be an interaction action between a user and the application that is monitored by the application. After the application determines the input event, the application performs preliminary processing on the input event, generates the input event task of the input event, and transfers the input event task to the choreographer. The choreographer executes the animation event task by using an animation callback method (CALLBACK_ANIMATION). The animation event task is that the application calculates data required by animation. The choreographer executes a measure (measure) event task, a layout (layout) event task, and the draw event task by using a traversal callback method (CALLBACK_TRAVERSAL). Both the view root layout and the choreographer are modules in the view system.

The activity includes a display event receiver (DisplayEventReceiver). The display event receiver is a module in the activity, and is configured to monitor a vertical synchronization (Vsync) signal and control the choreographer.

By using an example in which the electronic device is a mobile phone, a scenario in embodiments of this application includes a process in which the electronic device updates and displays an image based on user interaction when a user performs touching, for example, tapping or sliding based on an application interface or a system main interface (desktop). When the user performs a tap or slide operation on the interface, an input event is triggered. A user interface (User Interface, UI) thread executes an input event task, an animation event task, and a draw event task through the choreographer, and sends data obtained after drawing is completed to a render thread (render thread). The render thread performs real rendering based on the data obtained after the UI (User Interface) thread completes drawing, and then the rendered data is sent to be displayed.

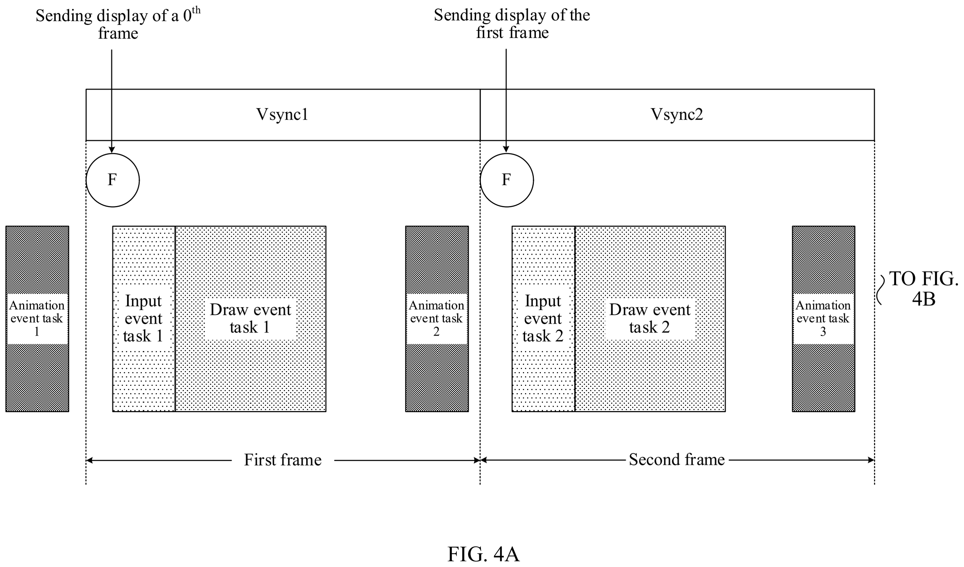

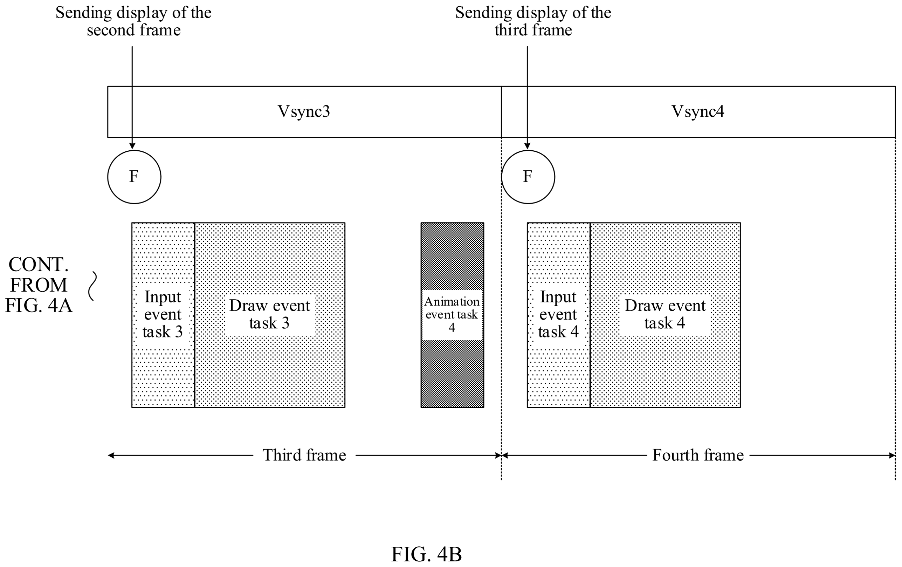

As shown in FIG. 4A and FIG. 4B, an embodiment of this application provides an interface image processing method. The method includes: executing an input event task and a draw event task of a t^{th} frame in an interface image processing process of the t^{th} frame; and executing an animation event task of a (t+1)^{th} frame in the interface image processing process of the t^{th} frame after the input event task and the draw event task of the t^{th} frame are executed.

Specifically, Arabic numerals after time tasks in FIG. 4A and FIG. 4B represent frame sequence numbers corresponding to the time tasks. For example, in a first frame, after an input event task and a draw event task of the first frame are executed, if an animation event task of a second frame has been received before the second frame, because the animation event task does not rely on a next frame and a user operation and an interface image processing process of the first frame has been completed, the animation event task of the second frame may be executed before the second frame. In this way, when the second frame is reached, because the animation event task of the second frame has been executed in the first frame, after an input event task and a draw event task of the second frame are executed in the second frame, a rendering and sending display process of an interface image of the second frame may continue to be executed. Compared with the related technologies, the rendering and sending display process of the interface image of the second frame may be performed more quickly. To be specific, assuming that the second frame encounters a complex scenario in which a load is high and resources are mutually congested, in the related technologies, because the animation event task of the second frame needs to be executed in the second frame, more time needs to be occupied. Consequently, the rendering and sending display process of the interface image of the second frame may be not performed in time, causing a phenomenon of image frame freezing. However, according to the interface image processing method in this embodiment of this application, because the animation event task of the second frame has been executed in advance in the first frame, and time occupied by the interface image processing process of the second frame in the second frame is short, a probability that the interface image processing process of the second frame is not processed in time is low, that is, a probability of image frame freezing is low.

The interface image processing method may be applied to the foregoing electronic device 100.

The electronic device in this application may be any product like a smart television, a mobile phone, a tablet computer, a personal computer (personal computer, PC), a personal digital assistant (personal digital assistant, PDA), a smart watch, a wearable electronic device, an augmented reality (augmented reality, AR) device, a virtual reality (virtual reality, VR) device, an in-vehicle device, an unmanned aerial vehicle, a smart vehicle, a smart speaker, a robot, or smart glasses.

According to the interface image processing method in this embodiment of this application, the animation event task of the (t+1)^{th} frame is executed in advance in the interface image processing process of the t^{th} frame, to reduce a probability of image frame freezing caused when an interface image of the (t+1)^{th} frame is not processed in time. To be specific, in this embodiment of this application, an animation event task that does not rely on a next frame and a user operation is executed in advance by using idle time of a processor after a task corresponding to a frame is processed. In this way, when the next frame encounters a complex scenario, a probability of a frame drop and frame freezing caused when a task is not processed in time due to an excessively heavy load of the processor and mutual congestion of resources may be reduced.

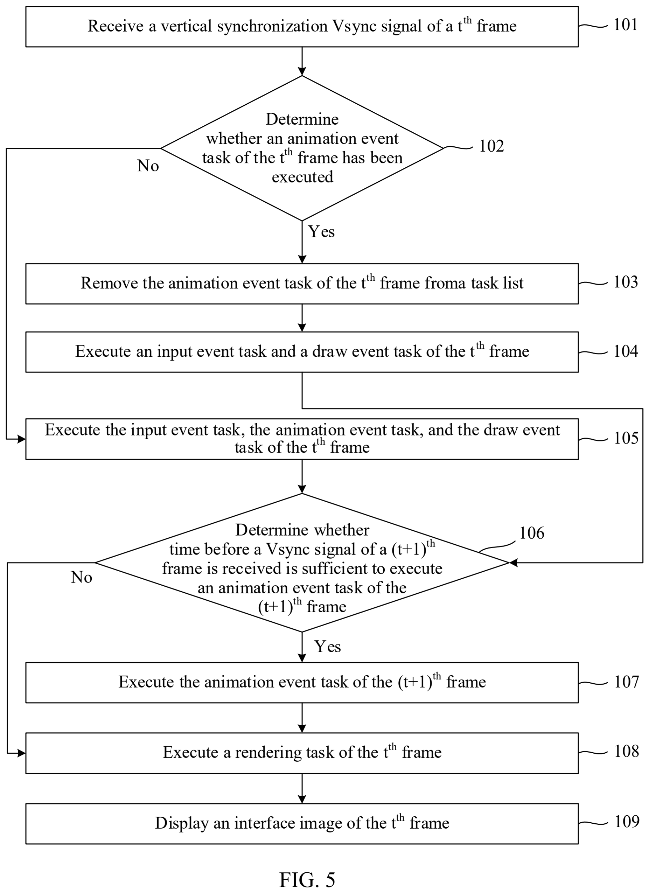

In a possible implementation, as shown in FIG. 5, the process of executing the animation event task of the (t+1)^{th} frame in the interface image processing process of the t^{th} frame after the input event task and the draw event task of the t^{th} frame are executed includes the following steps: After a vertical synchronization Vsync signal of the t^{th} frame is received in step 101, step 102 is performed: Determine whether an animation event task of the t^{th} frame has been executed. If the animation event task of the t^{th} frame has been executed, step 103 is performed: Remove the animation event task of the t^{th} frame from a task list; and step 104 is performed: Execute the input event task and the draw event task of the t^{th} frame. If the animation event task of the t^{th} frame is not executed, step 105 is performed: Execute the input event task, the animation event task, and the draw event task of the t^{th} frame. After the process of step 104 or step 105, step 106 is performed: Determine whether time before a Vsync signal of the (t+1)^{th} frame is received is sufficient to execute the animation event task of the (t+1)^{th} frame. If the time before the Vsync signal of the (t+1)^{th} frame is received is sufficient to execute the animation event task of the (t+1)^{th} frame, before the Vsync signal of the t^{th} frame is received, step 107 is performed: Execute the animation event task of the (t+1)^{th} frame; and step 108 is performed: Execute a rendering task of the t^{th} frame. If the time before the Vsync signal of the (t+1)^{th} frame is received is insufficient to execute the animation event task of the (t+1)^{th} frame, before the Vsync signal of the t^{th} frame is received, step 108 is performed. In step 106, determining whether the time is sufficient is not determining whether all time before the Vsync signal of the (t+1)^{th} frame is received is sufficient to execute the animation event task of the (t+1)^{th} frame, but determining whether idle time other than time for executing a necessary task (for example, the rendering task) by the processor in the time before the Vsync signal of the (t+1)^{th} frame is received is sufficient to execute the animation event task of the (t+1)^{th} frame. If it is determined that the time is sufficient in step 106, the animation event task of the (t+1)^{th} frame is executed in advance in the t^{th} frame, and then the rendering task of the t^{th} frame is executed. After rendering, sending display is performed, that is, step 109 is performed: Display an interface image of the t^{th} frame. Then, the (t+1)^{th} frame is entered. Because the animation event task of the (t+1)^{th} frame has been executed in advance in the t^{th} frame, the task does not need to be executed in the (t+1)^{th} frame, and the (t+1)^{th} frame has more events to execute another task. If it is determined that the time is insufficient in step 106, the animation event task of the (t+1)^{th} frame is not executed in the t^{th} frame, and other necessary tasks including step 108 and step 109 are directly executed. In this way, it can be ensured that the task of displaying the interface image of the t^{th} frame has more time to be executed.

In a possible implementation, the foregoing process of executing, if the time before the Vsync signal of the (t+1)^{th} frame is received is sufficient to execute the animation event task of the (t+1)^{th} frame, the animation event task of the (t+1)^{th} frame before the Vsync signal of the t^{th} frame is received and after the input event task and the draw event task of the t^{th} frame are executed includes: if the time before the Vsync signal of the (t+1)^{th} frame is received is sufficient to execute the animation event task of the (t+1)^{th} frame, executing the animation event task of the (t+1)^{th} frame with a delay of a time interval before the Vsync signal of the t^{th} frame is received and after the input event task and the draw event task of the t^{th} frame are executed, and then executing the rendering task of the t^{th} frame and displaying the interface image of the t^{th} frame. The time interval is, for example, a plurality of ms. The idle time of the processor from time after the input event task and the draw event task of the t^{th} frame are executed to time before the (t+1)^{th} frame is determined. For example, the idle time of the processor is a milliseconds, time required for executing the animation event task of the (t+1)^{th} frame is b milliseconds, and preparing time required for executing the animation event task of the (t+1)^{th} frame is c milliseconds. As long as a≥b+c, any time from c to (a-b-c) may be used as the time interval. For example, preparing time required for executing the animation event task of the (t+1)^{th} frame may be time for releasing a process lock. Through the setting of the time interval, an abnormality caused by continuous execution of the task of the t^{th} frame and the task of the (t+1)^{th} frame can be avoided.

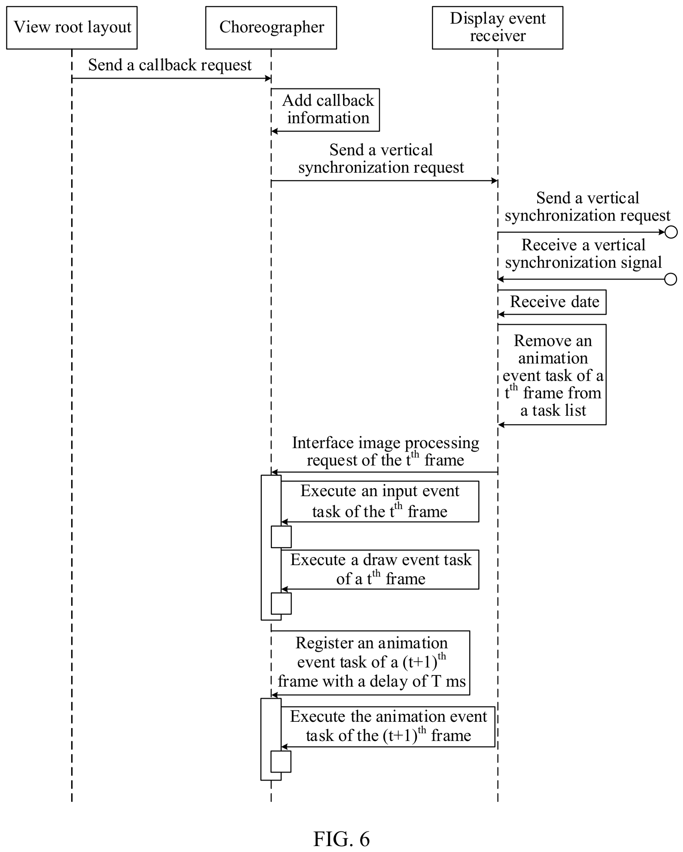

In a possible implementation, as shown in FIG. 6, an embodiment of this application is described below based on a signaling relationship between a plurality of modules in a software structure. First, a view root layout sends a callback request to a choreographer in response to an input event. The input event is, for example, an operation like a slide tap operation on an interface by a user. The callback request is, for example, a postCallback (CALLBACK_XXX) method. The choreographer adds callback information in response to the callback request and sends a vertical synchronization Vsync request to a display event receiver. The addition of the callback information may be implemented by using, for example, an addCallbacklocked method. The Vsync request is, for example, a scheduleVsync method. Vsync is a signal provided by an operating system, for coordinating and synchronizing with operations of the choreographer, that is, another module. The display event receiver sends, in response to the Vsync request of the choreographer, a vertical synchronization (Vsync) request, for example, a nativeSchedeleVsync method. Then, the display event receiver receives a vertical synchronization signal, for example, a dispatchVsync method. After a vertical synchronization Vsync signal of a t^{th} frame is received, the display event receiver receives data by using an onVsync method, and determines whether an animation event task of the t^{th} frame has been executed; and removes, if the animation event task of the t^{th} frame has been executed, the animation event task of the t^{th} frame from a task list by using a remove (postAnim) method, and sends an interface image processing request of the t^{th} frame to the choreographer by using a doFrame method. The choreographer executes, in response to the interface image processing request of the t^{th} frame, an input event task and a draw event task of the t^{th} frame in the task list. For example, the input event task is executed by using a doCallback (CALLBACK_INPUT) method, and execution may also be performed by using a doCallback (CALLBACK_ANIMATION) method. However, because the animation event task of the t^{th} frame has been removed from the task list, the animation event task of the t^{th} frame is not actually executed. Then, the draw event task is executed by using a doCallback (CALLBACK_TRAVERSAL) method. Then, if time before a Vsync signal of a (t+1)^{th} frame is received is sufficient to execute an animation event task of the (t+1)^{th} frame, the choreographer registers the animation event task of the (t+1)^{th} frame with a delay of T ms by using a postAnim method, and executes the animation event task of the (t+1)^{th} frame by using the doCallback (CALLBACK_ANIMATION) method. Then, a rendering task of the t^{th} frame is executed and an interface image of the t^{th} frame is displayed. Then, in the (t+1)^{th} frame, the step in which the view root layout sends the callback request to the choreographer in response to the input event is executed again, to implement an interface image processing process of the (t+1)^{th} frame. A specific principle is the same as that of an interface image processing process of the t^{th} frame, and details are not described herein again.

In a process of each frame, the choreographer executes, in response to an interface image processing request of the current frame, the doCallback (CALLBACK_INPUT) method, the doCallback (CALLBACK_ANIMATION) method, and the doCallback (CALLBACK_TRAVERSAL) method. The foregoing describes a case in which an animation event task of the current frame is removed from the task list. If the animation event task of the current frame is not removed from the task list, that is, the animation event task of the current frame is not executed in advance, execution of the animation event task of the current frame is triggered when the doCallback (CALLBACK_ANIMATION) method is executed. In addition, if time before a Vsync signal of a next frame is received is insufficient to execute an animation event task of the next frame, the choreographer does not execute the animation event task of the next frame in advance, but normally executes necessary tasks of the current frame, such as a rendering task and sending display of the current frame, to avoid a case in which processing is not performed in time due to mutual congestion of resources in a complex scenario.

In a possible implementation, the input event task, the animation event task, the draw event task, and the rendering task are executed based on a first-type core of a processor, the processor includes the first-type core, a second-type core, and a third-type core, a frequency of the first-type core is less than a frequency of the second-type core, and the frequency of the first-type core is greater than a frequency of the third-type core. The first-type core may be referred to as a middle core, the second-type core may be referred to as a big core, and the third-type core may be referred to as a little core. A higher frequency of a core indicates higher power consumption, and a lower frequency indicates lower power consumption. In conventional technologies, in an interface image processing process, a choreographer may perform switching between the little core and the middle core when executing different tasks. In this way, there are many cross-core behaviors, resulting in a high scheduling load and a low energy efficiency ratio. In this embodiment of this application, an interface image processing process is bound to the middle core. To be specific, step 104, step 105, step 107, and step 108 are performed by the middle core, to improve a response priority, thereby having a low load and a high energy efficiency ratio.

An embodiment of this application further provides an interface image processing apparatus. The apparatus includes: a first module, configured to execute an input event task and a draw event task of a t^{th} frame in an interface image processing process of the t^{th} frame; and a second module, configured to execute an animation event task of a (t+1)^{th} frame in the interface image processing process of the t^{th} frame after the input event task and the draw event task of the t^{th} frame are executed.

The interface image processing apparatus may use the interface image processing method in any one of the foregoing embodiments. Specific processes and principles are the same as those in the foregoing embodiments, and details are not described herein again.

It should be understood that division of the interface image processing apparatus into modules is merely logical function division. The modules may be all or partially integrated in a physical entity or may be physically separated in actual implementation. In addition, all the modules may be implemented by software invoked by a processing element, or may be implemented by hardware; or some modules may be implemented by the software invoked by the processing element, and some modules are implemented by the hardware. For example, any one of the first module and the second module may be an independent processing element, may be integrated in the interface image processing apparatus, for example, integrated in a chip of the interface image processing apparatus, or may be stored in a memory of the interface image processing apparatus in a form of a program. A function of each of the foregoing modules may be invoked and executed by a processing element of the interface image processing apparatus. The implementation of another module is similar thereto. In addition, all or some of the modules may be integrated together, or may be independently implemented. The processing element herein may be an integrated circuit having a signal processing capability. In an implementation process, the steps of the foregoing method or the foregoing modules may be implemented through an integrated logic circuit of hardware in the processor element or instructions in a form of software.

For example, the first module and the second module may be one or more integrated circuits configured to implement the foregoing method, for example, one or more application specific integrated circuits (Application Specific Integrated Circuits, ASICs), or one or more digital signal processors (digital singnal processors, DSPs), or one or more field programmable gate arrays (Field Programmable Gate Arrays, FPGAs). For another example, when one of the foregoing modules is implemented in a form of a program invoked by the processing element, the processing element may be a general processor, for example, a central processing unit (Central Processing Unit, CPU) or another processor that may invoke the program. For another example, the modules may be integrated together and implemented in a form of a system-on-a-chip (system-on-a-chip, SOC).

An embodiment of this application further provides a computer-readable storage medium. The computer-readable storage medium stores a computer program. When the computer program is run on a computer, the computer is enabled to perform the interface image processing method in any one of the foregoing embodiments.

All or some of the foregoing embodiments may be implemented by software, hardware, firmware, or any combination thereof. When software is configured for implementation, all or some of embodiments may be implemented in a form of a computer program product. The computer program product includes one or more computer instructions. When the computer program instructions are loaded and executed on the computer, the processes or functions according to this application are all or partially generated. The computer may be a general-purpose computer, a dedicated computer, a computer network, or any other programmable apparatus. The computer instructions may be stored in the computer-readable storage medium or may be transmitted from the computer-readable storage medium to another computer-readable storage medium. For example, the computer instructions may be transmitted from a website, a computer, a server, or a data center to another website, computer, server, or data center in a wired manner (for example, through a coaxial cable, an optical fiber, or a digital subscriber line) or in a wireless manner (for example, through infrared rays, radio, or a microwave). The computer-readable storage medium may be any available medium accessible by a computer, or a data storage device, for example, a server or a data center, integrating one or more available media. The available medium may be a magnetic medium (for example, a floppy disk, a hard disk, or a magnetic tape), an optical medium (for example, a DVD), a semiconductor medium (for example, a solid state drive (Solid State Disk)), or the like.

In embodiments of this application, "at least one" means one or more, and "a plurality of' means two or more. "And/or" describes an association relationship between associated objects and represents that there may be three relationships. For example, A and/or second signal line may represent the following cases: There may only be the A, there may be both the A and the second signal line, and there may only be the second signal line. There may be a single A and second signal line, there may be a plurality of A and second signal line. The character "/" generally represents an "or" relationship between the associated objects. The expression "at least one of the following items" or a similar expression is any combination of the items, including a single item or any combination of a plurality of items. For example, at least one of a, a second signal line, and a third signal line may represent: a, the second signal line, the third signal line, a-the second signal line, a-the third signal line, the second signal line-the third signal line, or a-the second signal line-the third signal line, where there may be a single a, second signal line, or third signal line, or there may be a plurality of a, second signal lines, or third signal lines.

The foregoing descriptions are merely preferred embodiments of this application, and are not intended to limit this application. A person skilled in the art may make various modifications and changes to this application. Any modification, equivalent replacement, or improvement made without departing from the spirit and principle of this application shall fall within the protection scope of this application.

## Claims

1. An interface image processing method, comprising:
executing an input event task and a draw event task of a t^{th} frame in an interface image processing process of the t^{th} frame; and
executing an animation event task of a (t+1)^{th} frame in the interface image processing process of the t^{th} frame after the input event task and the draw event task of the t^{th} frame are executed.

2. The interface image processing method according to claim 1, wherein
the process of executing an animation event task of a (t+1)^{th} frame in the interface image processing process of the t^{th} frame after the input event task and the draw event task of the t^{th} frame are executed comprises:
determining, after a vertical synchronization Vsync signal of the t^{th} frame is received, whether an animation event task of the t^{th} frame has been executed, and executing, if the animation event task of the t^{th} frame has been executed, the input event task and the draw event task of the t^{th} frame; and
executing, if time before a Vsync signal of the (t+1)^{th} frame is received is sufficient to execute the animation event task of the (t+1)^{th} frame, the animation event task of the (t+1)^{th} frame before the Vsync signal of the t^{th} frame is received and after the input event task and the draw event task of the t^{th} frame are executed.

3. The interface image processing method according to claim 2, further comprising:
after the vertical synchronization Vsync signal of the t^{th} frame is received, executing the input event task, the animation event task, and the draw event task of the t^{th} frame if it is determined that the animation event task of the t^{th} frame is not executed.

4. The interface image processing method according to claim 2, further comprising:
after the process of executing the input event task and the draw event task of the t^{th} frame, executing a rendering task of the t^{th} frame if the time before the Vsync signal of the (t+1)^{th} frame is received is insufficient to execute the animation event task of the (t+1)^{th} frame.

5. The interface image processing method according to claim 2, wherein
the process of executing, if time before a Vsync signal of the (t+1)^{th} frame is received is sufficient to execute the animation event task of the (t+1)^{th} frame, the animation event task of the (t+1)^{th} frame before the Vsync signal of the t^{th} frame is received and after the input event task and the draw event task of the t^{th} frame are executed comprises:
if the time before the Vsync signal of the (t+1)^{th} frame is received is sufficient to execute the animation event task of the (t+1)^{th} frame, executing the animation event task of the (t+1)^{th} frame with a delay of a time interval before the Vsync signal of the t^{th} frame is received and after the input event task and the draw event task of the t^{th} frame are executed.

6. The interface image processing method according to claim 2, wherein
the process of determining, after a vertical synchronization Vsync signal of the t^{th} frame is received, whether an animation event task of the t^{th} frame has been executed, and executing, if the animation event task of the t^{th} frame has been executed, the input event task and the draw event task of the t^{th} frame comprises:
determining, after a display event receiver receives the vertical synchronization Vsync signal of the t^{th} frame, whether the animation event task of the t^{th} frame has been executed; and removing, if the animation event task of the t^{th} frame has been executed, the animation event task of the t^{th} frame from a task list, and sending an interface image processing request of the t^{th} frame to a choreographer; and
executing, by the choreographer in response to the interface image processing request of the t^{th} frame, the input event task and the draw event task of the t^{th} frame in the task list.

7. The interface image processing method according to claim 6, wherein
before the display event receiver receives the vertical synchronization Vsync signal of the t^{th} frame, the method further comprises:
sending, by a view root layout, a callback request to the choreographer in response to an input event; and
adding, by the choreographer, callback information in response to the callback request, and sending a Vsync request to the display event receiver.

8. The interface image processing method according to any one of claims 1 to 7, wherein
the input event task, the animation event task, the draw event task, and the rendering task are executed based on a first-type core of a processor, the processor comprises the first-type core, a second-type core, and a third-type core, a frequency of the first-type core is less than a frequency of the second-type core, and the frequency of the first-type core is greater than a frequency of the third-type core.

9. An interface image processing apparatus, comprising:
a first module, configured to execute an input event task and a draw event task of a t^{th} frame in an interface image processing process of the t^{th} frame; and
a second module, configured to execute an animation event task of a (t+1)^{th} frame in the interface image processing process of the t^{th} frame after the input event task and the draw event task of the t^{th} frame are executed.

10. An electronic device, comprising:
a processor and a memory, wherein the memory is configured to store at least one instruction, and the instruction, when loaded and executed by the processor, enables the electronic device to perform the interface image processing method according to any one of claims 1 to 8.

11. A computer-readable storage medium, comprising a program or instructions, wherein when the program or the instructions are run on a computer, the interface image processing method according to any one of claims 1 to 8 is performed.
